# EUROPEAN PATENT APPLICATION

(11) **EP 1 813 422 A1**
(43) Date of publication of application: **01.08.2007**
(21) Application number: 07250200.8
(22) Date of filing: 18.01.2007
(51) Int. Cl.: B32B 27/16, B32B 27/28, B32B 27/32, B32B 27/34

(54) **Mutlilayer blow-molded, crosslinked container and method of making same**

(30) Priority: 27.01.2006 US 340939
(71) Applicant: Sonoco Development, Inc., Hartsville, South Carolina 29550 (US)
(72) Inventor: Dey, Subir K., Florence, South Carolina 29501 (US)
(74) Representative: Kinsler, Maureen Catherine

(57) **Abstract**

A container for a chemical product has a multilayer wall including at least one structural layer comprising a non-fluorinated polyolefin and a barrier layer of ethylene vinyl alcohol copolymer or polyamide. The wall is crosslinked, such as by exposure to radiation from an electron beam.

## Description

### BACKGROUND OF THE INVENTION

The invention relates to containers formed of polymer materials, and more particularly relates to such containers for products that contain chemical products such as solvents, insecticides, or the like.

In many cases, insecticides are not soluble in water but rather must be dissolved in a solvent such as hexane, heptane, octane, or the like. Insecticides are often provided in concentrated form, or in diluted "ready to use" emulsion form wherein the solvent makes up the vast majority of the contents of the container. To prevent loss of the solvent and/or the active ingredient from the container over extended periods of time, the container must have a high barrier performance for the solvent and active ingredient.

In the past, insecticides have been packaged in bottles formed of fluorinated high-density polyethylene (HDPE), which provides a good barrier against solvents and active ingredients. However, fluorination is an expensive process and has (or at least is perceived as having) significant negative environmental impact. Accordingly, the industry has been searching for alternative technologies that can offer the same or better performance as fluorinated HDPE.

### BRIEF SUMMARY OF THE INVENTION

The present invention addresses this need by providing a container whose wall has a multilayer structure including at least one structural layer comprising a non-fluorinated polyolefin and a barrier layer comprising a polymer selected from the group consisting of ethylene vinyl alcohol (EVOH), polyamide, and blends thereof. A tie layer of adhesive is disposed between the structural and barrier layers for adhering the layers together. Alternatively, in another embodiment, the structural layer can have an adhesive blended in with the polyolefin to provide the needed adhesion between layers. The container is crosslinked, for example by exposure to radiation from an electron beam.

The barrier layer can be the innermost layer of the wall, forming the inner surface of the container that is contacted by the chemical product in the container. In one embodiment of the invention, the wall is a three-layer structure having an inner barrier layer and an outer layer comprising non-fluorinated polyolefin, and an adhesive layer between the inner and outer layers.

Alternatively, the barrier layer can be between other layers. For example, in another embodiment of the invention, the wall is a five-layer structure having an inner layer comprising non-fluorinated polyolefin, a middle barrier layer, and an outer layer comprising non-fluorinated polyolefin. An adhesive layer is disposed between the inner and middle layers and an adhesive layer is disposed between the middle and outer layers.

In a further embodiment, the wall is a two-layer structure having an inner barrier layer in direct contact with an outer layer comprising a blend of non-fluorinated polyolefin with an adhesive.

In yet another embodiment, the wall is a three-layer structure having an inner layer comprising a blend of non-fluorinated polyolefin with an adhesive, a middle barrier layer, and an outer layer comprising a blend of non-fluorinated polyolefin with an adhesive.

The container in accordance with the various embodiments can include one or more additional layers, such as one or more layers of "regrind" (i.e., layers formed in whole or in part of recycled plastic).

A method in accordance with one embodiment of the invention comprises the steps of: (a) coextruding a multilayer parison comprising at least one structural layer comprising a non-fluorinated polyolefin, a barrier layer comprising a polymer selected from the group consisting of ethylene vinyl alcohol (EVOH) and polyamide, and an adhesive providing adhesion between the structural and barrier layers; (b) enclosing the parison in a mold; (c) inflating the parison in the mold to form a bottle; (d) removing the bottle from the mold; and (e) crosslinking the bottle by exposing the bottle to radiation.

The non-fluorinated polyolefin of the structural layer(s) can comprise various polymers, including polyethylene (e.g., homopolymers or copolymers of VLDPE, LDPE, MDPE, or HDPE), ethylene-containing copolymers (e.g., EVA, etc.), and polypropylene copolymers (e.g., copolymers or ter-polymers with ethylene, butene, hexene, etc.). Polypropylene homopolymers may also be used, although in that case the E-beam treatment must be conducted in an oxygen-free atmosphere.

The adhesive can comprise various compositions. Maleic anhydride-grafted ethylene-containing polymers are suitable (e.g., maleated HDPE, maleated LDPE, maleated LLDPE, maleated EVA, etc.), as are ethylene and glycidyl-containing polymers. Suitable commercially available adhesives include: LOTADER® (copolymers of ethylene and acrylic esters with a reactive group of maleic anhydride (MAH) or glycidyl methacrylate) or LOTRYL® (copolymers of ethylene and an acrylic derivative) available from Arkema Inc.; and BYNEL® (maleic anhydride-modified polyolefin such as maleated PE or EVA) available from Du Pont.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 is a container, partly in section, in accordance with one embodiment of the invention;
FIG. 2 is a cross-sectional view through the wall of the container of FIG. 1;
FIG. 3 is a cross-sectional view of a container wall in accordance with another embodiment of the invention; and
FIG. 4 is a flowchart of a method in accordance with one embodiment of the invention.

### DETAILED DESCRIPTION OF THE INVENTION

The present inventions now will be described more fully hereinafter with reference to the accompanying drawings in which some but not all embodiments of the inventions are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

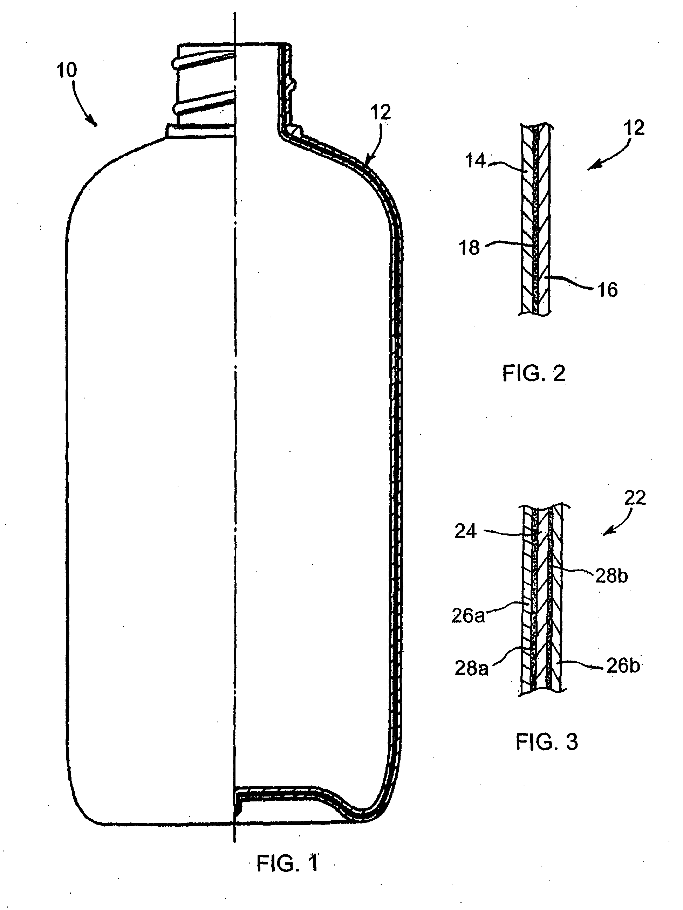

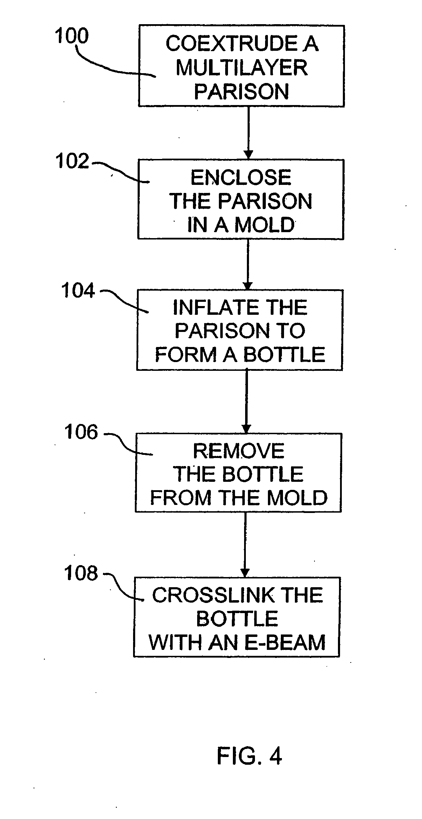

**FIG. 1** illustrates a container **10** in accordance with one embodiment of the invention. The container comprises a multilayer wall **12** that forms an enclosure for containing a product such as a chemical product. The container can be formed by a blow-molding process as depicted in the flowchart of FIG. 4. In a first step **100** of the process, a multilayer parison is coextruded. The parison has at least one structural layer and a barrier layer, and an adhesive, as further described below. As indicated in step **102,** the parison is enclosed in a mold. The parison is then inflated in the mold in step **104,** to form a bottle. In step **106,** the bottle is removed from the mold. Finally, in step **108,** the bottle is crosslinked by exposure to radiation from an E-beam.

FIG. 2 shows the multilayer structure of the wall **12** in greater detail. The wall includes an inner layer **14** that forms the inner surface of the container in contact with the product, and an outer layer **16** that forms the outer surface of the container. An adhesive layer **18** is disposed between the layers **14,16** to adhere the layers together.

The inner layer **14** comprises a barrier layer that serves as a barrier to the passage of one or more components of the product contained in the container. The barrier layer comprises a polymer selected from the group consisting of ethylene vinyl alcohol copolymer (EVOH) and polyamide.

The outer layer 16 is a structural layer providing mechanical rigidity and strength to the container. The outer layer comprises a non-fluorinated polyolefin. The non-fluorinated polyolefin of the structural layer can comprise various polymers, including polyethylene (e.g., homopolymers or copolymers of VLDPE, LDPE, MDPE, or HDPE), ethylene-containing copolymers (e.g., EVA, etc.), and polypropylene copolymers (e.g., copolymers or ter-polymers with ethylene, butene, hexene, etc.). Polypropylene homopolymers may also be used, although in that case the E-beam treatment must be conducted in an oxygen-free atmosphere.

The adhesive layer **18** comprises an adhesive that is effective to adhere the layers **14,16** to each other, and that can be coextruded along with the layers **14,16.** The adhesive comprises a polymer material dissimilar to the non-fluorinated polyolefin and the polymer of the barrier layer. Maleic anhydride-grafted ethylene-containing polymers are suitable (e.g., maleated HDPE, maleated LDPE, maleated LLDPE, maleated EVA, etc.), as are ethylene and glycidyl-containing polymers. Suitable commercially available adhesives include: LOTADER® (copolymers of ethylene and acrylic esters with a reactive group of maleic anhydride (MAH) or glycidyl methacrylate) or LOTRYL® (copolymers of ethylene and an acrylic derivative) both available from Arkema Inc.; and BYNEL® (maleic anhydride-modified polyolefin such as maleated PE or EVA) available from Du Pont.

In an alternative embodiment (not shown), the adhesive material can be blended into the outer layer **16.** The outer layer **16** is directly contacted by the inner barrier layer **14** in this embodiment. The adhesive component of the outer layer provides the required adhesion to secure the layers **14, 16** to each other.

Another embodiment of the invention is depicted in FIG. 3. The multilayer wall **22** in accordance with this embodiment is a five-layer structure comprising an inner structural layer **26a** of a non-fluorinated polyolefin, a middle barrier layer **24** of a polymer selected from the group consisting of EVOH and polyamide, and an outer structural layer **26b** of the non-fluorinated polyolefin. A first adhesive layer **28a** is disposed between the inner layer **26a** and the barrier layer **24,** and a second adhesive layer **28b** is disposed between the outer layer **26b** and the barrier layer **24.** The non-fluorinated polyolefin and the adhesive can be the same as the materials previously described for the embodiment of FIG. 2.

### Example

Tests were conducted to compare the barrier and stress cracking/vacuum paneling performance of blow-molded bottles containing 0.425% esfenvalerate as the active ingredient, dissolved in a solvent. Four different 10-ounce bottle structures were tested, with multiple samples of each: (1) a bottle formed of a single layer of non-fluorinated, non-crosslinked HDPE; (2) a bottle formed of a single layer of non-fluorinated, crosslinked HDPE; (3) a bottle having a multilayer structure HDPE/adh/EVOH/adh/HDPE, wherein the HDPE was non-fluorinated and the wall was non-crosslinked; and (4) a bottle having a multilayer structure HDPE/adh/EVOH/adh/HDPE, wherein the HDPE was non-fluorinated and the wall was crosslinked.

The bottles had a circular cross-section with a diameter that varied along the length of the bottle. The diameter at the bottom end of the bottle was about 2.4 inches (61 mm); the diameter at a height of 1.5 inches about the bottom end was about 2.1 inches (53 mm); the diameter at a height of about 3.5 inches was about 2.4 inches (61 mm); and for the remaining 2.5 inches of bottle height above the 3.5-inch height, the diameter diminished from the 2.4 inches. The overall bottle height was about 6 inches (152 mm).

Each of the bottles had a nominal wall thickness of about 19 mils (0.48 mm). The monolayer HDPE bottles were formed of HDPE having a melt flow index (MFI) of 6.6 (at 190° C, 2160 g, ISO 1133), a density of 0.953 g/cc, and a flexural modulus of 185 kpsi.

The multilayer bottles comprised two structural layers of the same HDPE as above, sandwiching a 1.3 mil barrier layer of EVOH having an MFI of 4.0 (at 210° C, 2160 g, ISO 1133), a density of 1.2 g/cc, a melting point of 191 ° C, and a flexural modulus of 969 kpsi. The tie layers comprised maleated HDPE having an MFI of 0.6 (at 190° C, 2160 g, ISO 1133), a density of 0.95 g/cc, a melting point of 136° C, and a flexural modulus of 128 kpsi.

For the crosslinked samples (2) and (4), the bottles were crosslinked by exposure to 200 kGy of radiation from an E-beam. The radiation treatment entailed six passes of 32 kGy each, followed by two passes of 4kGy each, for a total of 200 kGy.

The bottles were filled with the 0.425% esfenvalerate solution, capped, and induction sealed to minimize loss through the open end. The bottles were placed in an oven at 122° F at 25% relative humidity for a 1-month period.

Configuration (1): The monolayer non-crosslinked HDPE bottles after one month had lost about 13 grams in weight on average, and all of the bottles exhibited severe vacuum paneling (i.e., distortion of the bottle wall) and had stress cracking.

Configuration (2): The monolayer crosslinked HDPE bottles had lost about 6.6 grams on average after one month and 6 of the 11 bottles had severe vacuum paneling.

Configuration (3): The non-crosslinked multilayer bottles after one month had lost about 0.03 grams on average. One bottle had a slight crack and one had severe vacuum paneling.

Configuration (4): The crosslinked multilayer bottles after one month had lost about 0.05 grams on average. Six of the 11 bottles had slight vacuum paneling, and none had any cracking.

The test thus indicated that both the multilayer structure and the crosslinking were advantageous in terms of minimizing loss of product through the wall as well as minimizing stress cracking and vacuum paneling.

The oxygen transmission rate (OTR) of the bottles was also measured. The monolayer bottles (1) and (2) had OTRs of 0.31 and 0.28 cc/bottle/day, respectively. The multilayer bottles (3) and (4) both had an OTR of less than 0.0005 cc/bottle/day.

To quantify the degree of crosslinking in the bottles, samples of the bottles were heated in a differential scanning calorimeter (DSC), cooled, then heated again up to 250° C, and the area of the peak in the heat flow versus temperature upon melting (for each of the HDPE and the EVOH) during the second heating was determined in order to calculate the latent heat of crystallization, ΔH (J/g) of each polymer. For the EVOH, there was no detectable melting point peak, indicating that the EVOH was completely crosslinked. Based on the measured latent heat of crystallization for the HDPE, and the known standard heat of crystallization, the percent crystallization was calculated for the HDPE. Table I below shows the results of the DSC measurements and calculations:

**Table I**

| **Bottle Configuration** | **HDPE Melting Point Peak, °C** | **ΔH of Crystallization (J/g)** | **% Crystallization of HDPE** |
|---|---|---|---|
| (1) Monolayer HDPE | 133.6 | 176.3 | 63.7% |
| (2) Monolayer HDPE, crosslinked | 129.3 | 127.7 | 46.2% |
| (3) Multilayer HDPE/EVOH/HDPE | 134.5 | 159.3 | 63.7% |
| (4) Multilayer HDPE/EVOH/HDPE crosslinked | 129.5 | 130.3 | 52.1% |

The invention thus provides a container with high barrier performance without the use of a fluorination process.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A coextruded blow-molded polymer container for a chemical product, comprising:
a multilayer wall forming an enclosure for containing the chemical product, the multilayer wall comprising at least:
a first structural layer comprising a non-fluorinated polyolefin;
a barrier layer comprising a polymer selected from the group consisting of ethylene vinyl alcohol, polyamide, and blends thereof; and
an adhesive providing adhesion between the first structural layer and the barrier layer, the adhesive comprising a polymer material dissimilar to the non-fluorinated polyolefin and the polymer of the barrier layer; wherein the multilayer wall is crosslinked.

2. The coextruded blow-molded polymer container of claim 1, wherein the barrier layer forms an inner surface of the container contacted by the chemical product.

3. The coextruded blow-molded polymer container of claim 1, wherein the adhesive comprises a tie layer disposed between the first structural layer and the barrier layer.

4. The coextruded blow-molded polymer container of claim 1, wherein the adhesive is blended into the non-fluorinated polyolefin of the first structural layer.

5. The coextruded blow-molded polymer container of claim 1, wherein the multilayer wall further includes a second structural layer comprising the non-fluorinated polyolefin, the barrier layer being disposed between the first and second structural layers, and the adhesive providing adhesion between the second structural layer and the barrier layer.

6. The coextruded blow-molded polymer container of claim 5, wherein the adhesive comprises a first tie layer disposed between the first structural layer and the barrier layer, and a second tie layer disposed between the second structural layer and the barrier layer.

7. The coextruded blow-molded polymer container of claim 5, wherein the adhesive is blended into the non-fluorinated polyolefin of each of the first and second structural layers.

8. The coextruded blow-molded polymer container of claim 1, wherein the non-fluorinated polyolefin comprises polyethylene.

9. The coextruded blow-molded polymer container of claim 5, wherein the non-fluorinated polyolefin comprises polyethylene.

10. The coextruded blow-molded polymer container of claim 1, wherein the barrier layer comprises ethylene vinyl alcohol copolymer.

11. The coextruded blow-molded polymer container of claim 5, wherein the barrier layer comprises ethylene vinyl alcohol copolymer.

12. A method for making a container for a chemical product, comprising the steps of:
coextruding a parison, the parison having a multilayer wall comprising at least a first structural layer comprising a non-fluorinated polyolefin, a barrier layer comprising a polymer selected from the group consisting of ethylene vinyl alcohol and polyamide, and an adhesive providing adhesion between the first structural layer and the barrier layer, the adhesive comprising a polymer material dissimilar to the non-fluorinated polyolefin and the polymer of the barrier layer;
disposing the parison in a mold;
inflating the parison in the mold to form a bottle;
removing the bottle from the mold; and
exposing the bottle to radiation to crosslink the bottle.
